# EUROPEAN PATENT APPLICATION

(11) **EP 1 500 462 A1**
(43) Date of publication of application: **26.01.2005**
(21) Application number: 04017303.1
(22) Date of filing: 22.07.2004
(51) Int. Cl.: B23Q 11/08

(54) **Method for obtaining a bellows protection and bellows protection thereby obtained**

(30) Priority: 25.07.2003 IT PR20030062
(71) Applicant: Tecnimetal International S.r.L., 26037 San Giovanni In Croce (Cremona) (IT)
(72) Inventor: Borrini, Giuseppe, 26030 Solarolo Rainerio (CR) (IT)
(74) Representative: Guareschi, Antonella

(57) **Abstract**

The invention relates to the field of protections for moving parts of machine tools and more specifically it refers to a bellows protection. The method comprises forming strips (1) of PVC with fabric having a thickness of over 1 mm, subsequently said strips are joined in points along two contiguous longitudinal edges and then seamed with clips (2) having two tabs (4) that serve to lock the longitudinal edges of the joined strips and for a metal or rigid plastic section bar (5) that envelops said clips. Advantageously, the sliding means and the means for guiding the bellows protection are fastened directly to the strips.

## Description

Known bellow protections are constituted by a whole sheet of fabric coated with plastic material or of plastic material without a fabric core, which is subjected to a permanent pleating treatment by means of a known method.

Since the sheet has small thickness, it is necessary to insert in each pleat or in each series of 4-8 pleats a structure or frame made of metal or rigid plastic.

These frames are sealed or glued to the sheet.

These bellows achieve their purpose very well for small bellows, but not for large sizes.

The pleats constitute the critical stress point, so they are influenced by the frequency of opening and closing.

When the bellows reaches considerable dimensions, such as width exceeding two meters and length exceeding two metres, traction devices such as pantographs, opening limiter strips or other means for preventing the sheet or the structure of the frames from being damaged after undergoing greater than normal strain.

Another drawback that has been noted in known bellows is given by the fact that they are unable to withstand the impact of hot shavings due to their limited thickness (less than one millimetre), so they are easily perforated, thereby failing in their protecting function.

An object of the present invention is to obtain a markedly robust bellows, suitable for large dimensions and capable of withstanding high closure and opening velocities with high frequency.

An additional object is to eliminate the metal or plastic stiffening frames which for certain dimensions must be inserted in each pleat of the bellows.

Another object is to allow the elimination of the aforementioned traction devices. Yet a further object is to reduce the phenomenon of wear in the pleats, object that is achieved by eliminating the pleating.

This and other objects are all achieved by the method for obtaining bellows protections and the bellows protection thereby obtained, of the present invention, which is characterised by the contents of the appended claims.

This and other features shall become more readily apparent from the following description of a preferred embodiment, illustrated purely by way of non limiting example in the accompanying drawing tables, in which:

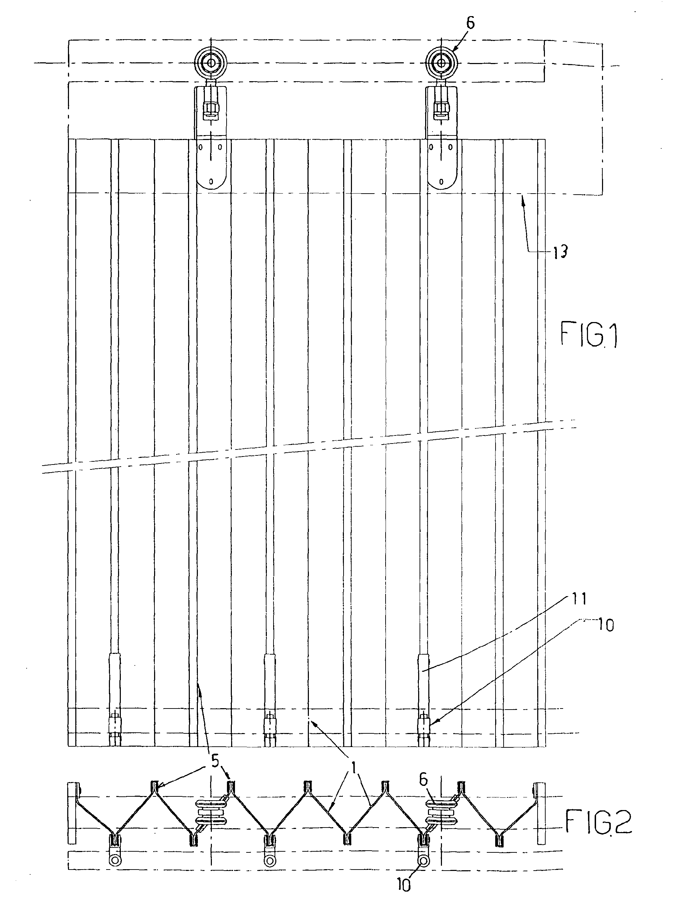

- Figure 1 is a front view of the bellows protection;
- Figure 2 is a top view of the bellows protection;

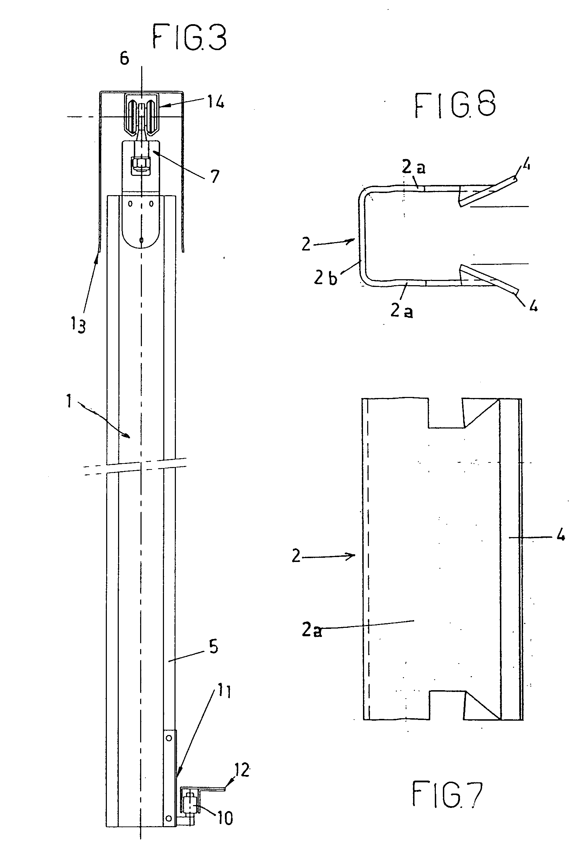

- Figure 3 is a side view of the bellows protection;
- Figure 4 shows an enlargement of the junction of the strips;
- Figures 5 and 6 respectively show a front view and a lateral view of a detail of the brackets for engaging the strips to the sliding carnage;
- Figures 7 and 8 respectively show a front view and a lateral profile view of a clip for joining the edges of two contiguous strips.
- Figure 9 is a section view of the tacking of the two edges

According to the method for obtaining the bellows protection, a plurality of strips are obtained by cutting a high thickness band, preferably made of PVC with layers of fabric within it.

The width and the number of the strips shall be a function of the width of the protection, whilst the length of the strips shall be a function of the height of the protection.

The thickness of the strips will exceed one millimetre and may also reach five millimetres for large bellows.

The strips are then paired in twos along the longitudinal edges in alternating fashion by tacking obtained by means of seaming or by point gluing.

Subsequently, a plurality of uniformly distributed clips is applied, which maintain stable the coupling along the edges and allow to anchor a metal profile that envelops the edges of two contiguous strips.

With reference to the figures, the bellows protection comprises a plurality of strips 1 made of PVC with polyester fabric with a thickness of more than one millimetre, preferably from 1 to 5 millimetres.

Each strip is joined to the contiguous one along the vertical edge 1a

Two contiguous strips are joined by tacking by means of traditional metallic clips 3 which traverse the thickness of the strips or by glue points, not shown, or with rivets.

As better illustrated in Figures 7 and 8, the reference number 2 designates U-shaped external clips made of spring steel to provide the walls 2a with a certain elasticity to flexion relative to the union cross member 2b; each clip has two tabs 4 inclined relative to the walls 2a and joined to the wings in such a way as to have an invitation for the introduction of the two overlying edges of the contiguous strips and an inner narrowing that prevents the strips, by interference, from exiting the clips.

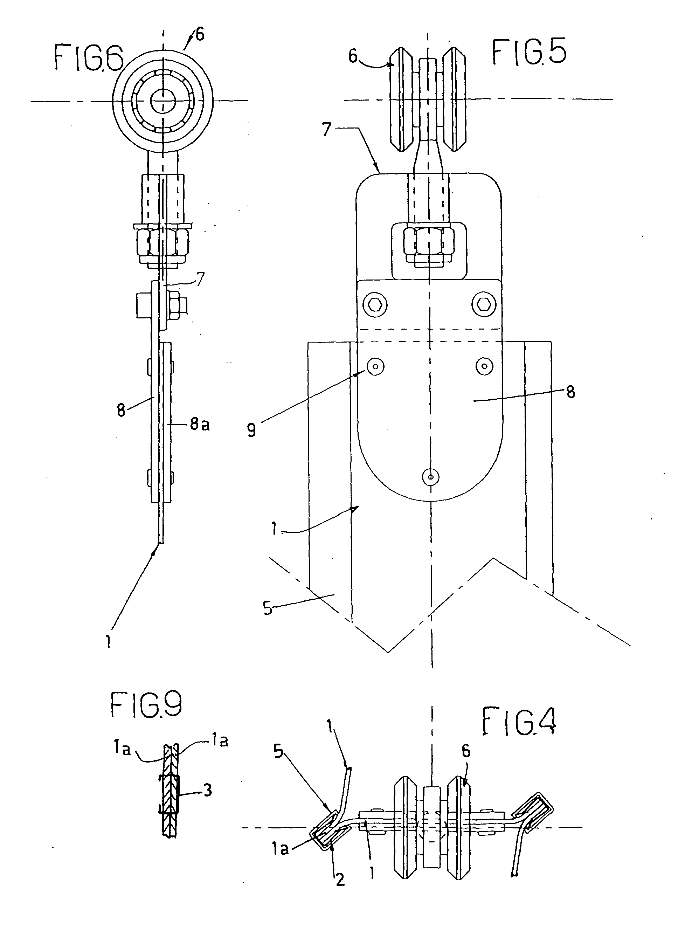

As is more readily apparent in Figure 4, the clips 2 are enveloped by a section bar 5 made of metal or rigid plastic having such a section as to envelop completely the clips 2 and in particular the two tabs 4 in such a way that, once inserted, the section bar can no longer extract itself.

As shown in Figures 5 and 5, since the strips have considerable thickness with respect to traditional ones, the sliding carriages 6 can be fastened directly to the strip 1.

A bracket made of sheet metal 7 is provided, whereto are bolted two plates 8 and 8a that envelop the strip that is locked between said plates by means of rivets 9.

From the side opposite the sliding carriages, guiding rollers 10 are provided, preferably made of nylon, supported by brackets 11 which are fastened by means of screws to the joined edges of the strips and thus envelop the metallic section bar.

The guiding rollers 10 slide in a guide 12 integral with the fixed part of the machine tool, not shown herein.

In the upper part of the bellows, the sliding carriages and the related rail 14 are enveloped by a metal plate 13 for protection against water splashes.

As can be intuited from the above description, the bellows protection of the present invention offers numerous advantages with respect to traditional, known protections, such as, without limitation:
- all types of metal or plastic stiffening frame are eliminated;
- the structure of the protection as described above allows it operation even at high speeds (120 m/min') and with accelerations of up 2 G;
- for equal dimensions, weight is much lower than in traditional systems, having eliminated stiffening frames and traction systems and, consequently, the power required for driving is insignificant;
- high stability and non-deformability of the structure even with considerable dimensions and up to six metres of width;
- the firmness and mechanical resistance of the strips allow to anchor them to the sliding means and to the guiding means needed to guide the bellows;
- since the bellows is no longer made up of a single sheet but its structure is composed of multiple strips, all joined together, variable sizes in terms of width and height can be obtained, as it is no longer necessary to follow pleating processes or insert frames which tend to be standardised.

The band used to form the strips may also be made of a different material such as synthetic or natural rubber, and the fabric used may preferably be polyester or another synthetic or natural fibre.

## Claims

1. Method for obtaining a bellow protection, **characterised in that** it provides for: obtaining a plurality of band strips (1) with thickness exceeding 1 mm which are subsequently coupled in twos along the longitudinal edges by means of a plurality of clips (2) which maintain stable the coupling along the edges and on which clips is inserted a metal or rigid plastic section bar (5).

2. Method as claimed in claim 1, **characterised in that** before inserting the clips (2) a tacking of the edges is accomplished by seaming using metallic clips (3) which traverse the two edges of the two coupled strips.

3. Method as claimed in claim 1, **characterised in that** before inserting the clips (2) a tacking of the edges is accomplished by gluing.

4. Method as claimed in claim 1, **characterised in that** the strips (1) are made of PVC with polyester fabric layers.

5. Method as claimed in claim 1, **characterised in that** the strips (1) are made of synthetic or natural rubber with layers of fabric made of natural or synthetic fibre.

6. Bellows protection, **characterised in that** it comprises:
a plurality of strips (1) whose thickness exceeds one millimetre;
a plurality of metal clips (2) able to join the strips in twos along the longitudinal edges;
a section bar (5) made of metal or rigid plastic having such a section as to completely envelop the clips over the entire length of the longitudinal edges.

7. Bellows protection as claimed in claim 6, **characterised in that** the clips (2) are made of spring steel and comprise two elastic walls (2a) with respect to a union cross member (2b), each of the two walls (2a) comprising a tab (4) inclined relative to the wall in such a way as to provide an invitation for the introduction of the two superposed edges of the two contiguous strips and an inner narrowing that prevents by interference the strips from exiting the clips.

8. Bellows protection as claimed in claim 6, **characterised in that** the tabs (4) of the clips (2) are oriented outwardly in such a way as to lock the metal section bar (5) once it is inserted on the clips themselves.

9. Bellows protection as claimed in claim 6, **characterised in that** it comprises sliding carriages (6) mechanically connected directly to the strips (1).

10. Bellows protection as claimed in claim 6, **characterised in that** it comprises guiding rollers connected directly to the strips or to the metal section bar that protects the clips that join the strips.

11. Bellows protection as claimed in claim 6, **characterised in that** the strips are made of PVC with polyester fabric layers.

12. Protection as claimed in the previous claims, **characterised in that** it comprises metallic tacking clips (3) that traverse two layers of contiguous strips positioned along the joined edges over the entire length of the strips.
